# EUROPÄISCHE PATENTSCHRIFT

(11) **EP 3 676 108 B1**
(45) Veröffentlichungstag und Bekanntmachung des Hinweises auf die Patenterteilung: **12.10.2022**
(21) Anmeldenummer: 18727726.4
(22) Anmeldetag: 17.05.2018
(51) Int. Cl.: B60C 11/24, B60C 23/04, B60C 23/20

(54) **MIT EINEM RFID ANGEORDNETER FAHRZEUGREIFEN**
VEHICLE TIRE WITH RFID
PNEUMATIQUE DE VÉHICULE INTÉGRANT UN RFID

(30) Priorität: 28.08.2017 DE 102017214990
(43) Veröffentlichungstag der Anmeldung: 08.07.2020
(73) Patentinhaber: Continental Reifen Deutschland GmbH, 30165 Hannover (DE)
(72) Erfinder: KURZ, Martin, 30161 Hannover (DE); BERGER, Christoph, 30173 Hannover (DE); BUSCHE, Joachim, 31157 Sarstedt (DE)
(74) Vertreter: Continental Corporation
(86) Internationale Anmeldenummer: PCT/EP2018/062849
(87) Internationale Veröffentlichungsnummer: WO 2019/042597

(56) Entgegenhaltungen:
- EP-A1- 2 995 474
- WO-A1-00/42569
- WO-A1-2013/034969
- WO-A1-2016/105687
- WO-A2-2007/127106
- WO-A2-2007/127220
- US-A1- 2010 123 584
- US-A1- 2011 095 891
- US-A1- 2016 229 234

## Beschreibung

Die Erfindung betrifft einen Fahrzeugreifen.

Es ist bekannt, Fahrzeugreifen mit unterschiedlichen Sensoren zu versehen.

Aus dem Stand der Technik sind unterschiedliche Konzepte bekannt, Sensoren am Reifen anzuordnen. Alle herkömmlichen Konzepte besitzen unterschiedliche Nachteile.

Beispielhaft sind derartige Konzepte in WO 2007/127220 A2, US 2010/123584, WO 00/42569 A1, US 2016/229234 A1, WO 2013/034969 A1, WO 2016/105687 A1, EP 2 995474 A1, WO 2007/127106 A2 oder US 2011/095891 A1 beschrieben.

Der Erfindung liegt die Aufgabe zugrunde, Fahrzeugreifen mit Sensoren zu verbessern.

Gelöst wird die Aufgabe gemäß dem Oberbegriff und den kennzeichnenden Merkmalen von Anspruch 1 dadurch, dass
der Transponder mindestens einen Sensor zur Erfassung von physikalischen Messdaten vom Fahrzeugreifen umfasst,
wobei die erfassten Messdaten über eine Funkverbindung zu einer Sende- und Empfangseinheit übertragen werden.

Ein Vorteil der Erfindung ist insbesondere darin zu sehen, dass auf diese Weise Sensoren im Fahrzeugreifen auf einfache Weise angeordnet werden können. Ein wesentlicher Vorteil eines Transponders besteht darin, dass dieser keine eigene Energieversorgung benötigt. Der Transponder wird über eine elektromagnetische Strahlung mit Energie versorgt, und die erfassten Messdaten werden per Funksignal an eine zentrale Sende- und Empfangseinheit übertragen. Die Energieversorgung des integrierten oder angeschlossenen Sensors erfolgt ebenfalls über die elektromagnetische Strahlung, die der Sender beim Senden und Empfangen empfängt. Der Sensor muss dadurch nicht mit einer eigenen Energieversorgung, zum Beispiel in Form einer Batterie, ausgerüstet werden.

Erfindungsgemäß ist vorgesehen, dass der Sensor als Bauteil direkt am Transponder integriert ist.

Dadurch lässt sich der Transponder mit dem integrierten Sensor auf einfache Weise im oder am Reifen integrieren. Insbesondere lässt sich der Transponder mit dem Sensor einfach zwischen Reifenbauteilen platzieren.

In einer weiteren vorteilhaften Weiterbildung der Erfindung ist vorgesehen, dass der Sensor einen Temperatursensor umfasst.

Auf diese Weise lassen sich Temperaturen an bestimmten Reifenbauteilen auf einfache Weise erfassen.

In einer weiteren vorteilhaften Weiterbildung der Erfindung ist vorgesehen, dass der Sensor einen Profiltiefensensor umfasst.

Bei der Profiltiefe ist es ausreichend, diese Messgröße nur bei bestimmten Wartungsintervallen zu erfassen.

Bei dieser Ausführung ist der Profiltiefensensor unterhalb oder im Laufstreifen des Fahrzeugreifens angeordnet.

In einer weiteren vorteilhaften Weiterbildung der Erfindung ist vorgesehen, dass der Sensor einen Kraftsensor und/oder einen Drucksensor umfasst.

Mit Kraftsensoren lassen sich auf einfache Weise bestimmte Belastungen in Reifenbauteilen einfach erfassen.

In einer weiteren vorteilhaften Weiterbildung der Erfindung ist vorgesehen, dass die erfassten Messdaten in einer Parkposition des Fahrzeuges zu einer Sende- und Empfangseinheit übertragen werden,
wobei die Sende- und Empfangseinheit fest in der Umgebung der Parkposition des Fahrzeuges installiert ist.

Eine Anwendung wäre beispielsweise die, dass das Fahrzeug sich in einer Werkstatt befindet und in Parkposition neben der Hebebühne eine Sende- und Empfangseinheit fest installiert ist. Diese Sende- und Empfangseinheit startet ein Abfragesignal und erhält anschließend die Messdaten, die mit dem Transponder erfasst werden. Die Mitarbeiter der Werkstatt können dann entsprechende Maßnahmen treffen, die mit den erfassten Messdaten in Verbindung stehen. Die Messdaten können beispielsweise einen Hinweis darauf geben, dass der Fahrzeugreifen ersetzt werden muss, weil an bestimmten Reifenbauteilen Beschädigungen detektiert worden sind.

In einer weiteren vorteilhaften Weiterbildung der Erfindung ist vorgesehen, dass die erfassten Messdaten an eine zentrale Empfangseinheit von einem Fuhrparkmanagement weitergeleitet werden.

Das Fuhrparkmanagement würde beispielsweise Informationen zu der Profiltiefe der einzelnen Fahrzeugreifen erhalten. Anschließend könnte das Fuhrparkmanagement mit diesen Daten ermitteln, wann an dem Fahrzeug der nächste Reifenwechsel erforderlich ist.

Erfindungsgemäß ist vorgesehen, dass der Transponder im Bereich des Reifenwulstes angeordnet ist.

Der Reifenwulst eignet sich besonders für die Platzierung von Transpondern, weil die Dauerbelastung in diesem Bereich des Fahrzeugreifens relativ gering ist. Der Transponder mit dem Sensor kann jedoch auch in der Seitenwand oder im Bereich des Laufstreifens angeordnet sein, um in diesen Bereichen Messdaten zu erfassen.

In einer vorteilhaften Weiterbildung der Erfindung ist vorgesehen, dass die Höhenabmessung in radialer Richtung des Fahrzeugreifens zwischen dem Transponder und der oberen Spitze des Kernreiters mindestens 5 mm beträgt.

Dadurch ist der Transponder in einem Bereich des Reifenwulstes angeordnet in dem die mechanische Beanspruchung im Fahrbetrieb des Fahrzeugreifens relativ gering ist.

Erfindungsgemäß ist vorgesehen, dass der Transponder auf der zur Seitenwand gerichteten Außenseite des Kernreiters angeordnet ist.

Dadurch läßt sich von außen eine einfache Funkverbindung mit einer hohen Signalqualität zum Transponder realisieren.

In einer vorteilhaften Weiterbildung der Erfindung ist vorgesehen, dass der Transponder mit seinen beiden Antennenteilen in Umfangsrichtung zum Reifenkern ausgerichtet ist. Dadurch besitzt der Transponder eine optimale Ausrichtung im Reifenwulst, um eine optimale Sende- und Empfangsleistung zu gewährleisten.

Erfindungsgemäß ist vorgesehen, dass der Transponder ein folienförmiger RFID-Transponder ist,
wobei der Transponder-Chip und die Antennen in einer Trägerfolie eingebettet sind. Folienförmige RFID-Transponder besitzen eine sehr geringe Materialdicke. Durch die hohe Biegsamkeit dieser Transponder sind sie besonders für den Einsatz zwischen Reifenbauteilen geeignet.

Bei einer alternativen Ausführungsform ist der Transponder einseitig auf einer Trägerfolie aufgebracht.

In einer weiteren vorteilhaften Weiterbildung der Erfindung ist vorgesehen, dass die Trägerfolie eine Materialdicke von kleiner als 1mm besitzt.

Bei dieser Materialdicke besitzt der folienförmige RFID-Transponder eine besonders hohe Flexibilität. Das flexible Kunststoffmaterial lässt sich gut mit dem Gummimaterial der umgebenden Reifenbauteile verbinden.

Erfindungsgemäß ist vorgesehen, dass die Trägerfolie aus einem flexiblen Kunststoff besteht.

In einer weiteren vorteilhaften Weiterbildung der Erfindung ist vorgesehen, dass der folienförmige Transponder eine zusätzliche Materialbeschichtung aufweist.

Durch diese Materialbeschichtung lässt sich die Verbindung zu den angrenzenden Reifenbauteilen verbessern.

In einer weiteren vorteilhaften Weiterbildung der Erfindung ist vorgesehen, dass der Transponder eine Breite zwischen 3 und 15 mm sowie eine Länge zwischen 30 und 80 mm aufweist.

Bei diesen Abmessungen des Transponders lässt sich dieser auf einfache Weise zwischen den Reifenbauteilen anordnen.

Erfindunsgemäß ist vorgesehen, dass der Transponder ein Transponder mit zwei spiralförmigen Antennen ist.

Diese Art von Transpondern weisen eine hohe Dauerhaltbarkeit auf und eigenen sich daher für den Einsatz zwischen Reifenbauteilen.

In einer weiteren vorteilhaften Weiterbildung der Erfindung ist vorgesehen, dass der Transponder mit den zwei spiralförmigen Antennen zwischen zwei Materialagen aus Gummimaterial eingebettet ist.

Dadurch wird die Dauerhaltbarkeit des Transponders wesentlich verbessert.

In einer weiteren vorteilhaften Weiterbildung der Erfindung ist vorgesehen, dass der Transponder bei der Vorkonfektionierung der Reifenbauteilgruppe aus Reifenkern und Kernreiter aufgebracht wird.

Der Transponder lässt sich bei der Vorkonfektionierung dieser Reifenbauteilgruppe einfach auf der Außenseite des Kernreiters platzieren.

Anhand mehrerer Ausführungsbeispiele soll die Erfindung näher erläutert werden. Es zeigen:
Fig. 1: einen Reifenwulst
Fig. 2: eine Aufsicht auf den folienförmige RFID-Transponder
Fig. 3: eine Aufsicht auf den Transponder mit spiralförmigen Antennen

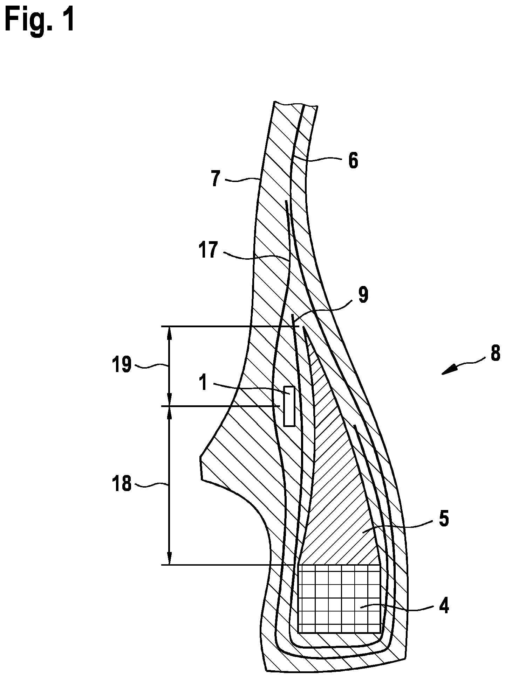

Die Figur 1 zeigt schematisch den Querschnitt eines Reifenwulstes 8. Bei diesem Ausführungsbeispiel ist der Transponder 1 mit einem integrierten Sensor im Reifenwulst 8 angeordnet. Der Transponder mit einem integrierten Sensor kann auch an anderen Stellen im Fahrzeugreifen angeordnet sein. Weitere bevorzugte Positionen für Transponder mit Sensoren sind Bereiche der Seitenwand, Bereiche des Laufstreifens oder aber Bereiche in der Gürtellage des Fahrzeugreifens. Der Transponder 1 ist im Reifenwulst z. B. zwischen dem Kernreiter 5 und dem äußeren Lagenumschlag 17 der Karkasslage 6 angeordnet. Die Karkasslage 6 bildet im Reifenwulst 8 einen Lagenumschlag 17, der um den Kernreiter 5 und den Reifenkern 4 herumgeführt ist. Der Reifenkern 4 umfasst eine Vielzahl von Drahtkernen und hat daher eine sehr hohe Materialsteifigkeit. Durch diese Materialsteifigkeit des Reifenkerns ist der Transponder in einer besonders beruhigten Materialzone des Fahrzeugreifens angeordnet, die nur geringen Materialbelastungen ausgesetzt ist.

Um den Kernreiter 5 und den Reifernkern 4 ist optional eine zusätzliche Gummilage 9 angeordnet, die ebenfalls als "Flipper-Bauteil" bezeichnet wird.

Bei dieser zweiten Ausführung ist der Transponder 1 zwischen der Gummilage 9 und dem Lagenumschlag 9 angeordnet.

Die Höhe 18 zwischen Transponder 1 und Unterseite des Kernreiters 5 beträgt mindestens 3 mm, vorzugsweise mindestens 5 mm oder mindestens 7 mm. Durch die höhere Positionierung des Transponders 1 läßt sich die Signalübertragung zum Empfangsgerät besser realisieren.

Außerdem beträgt die Höhe 19 zwischen Transponder 1 und der Spitze des Kernreiters 5 mindestens 5 mm, , vorzugsweise mindestens 7 mm oder mindestens 9 mm.

Die Daten des Transponders lassen sich dadurch sehr gut mit einem externen Lesegerät auslesen.

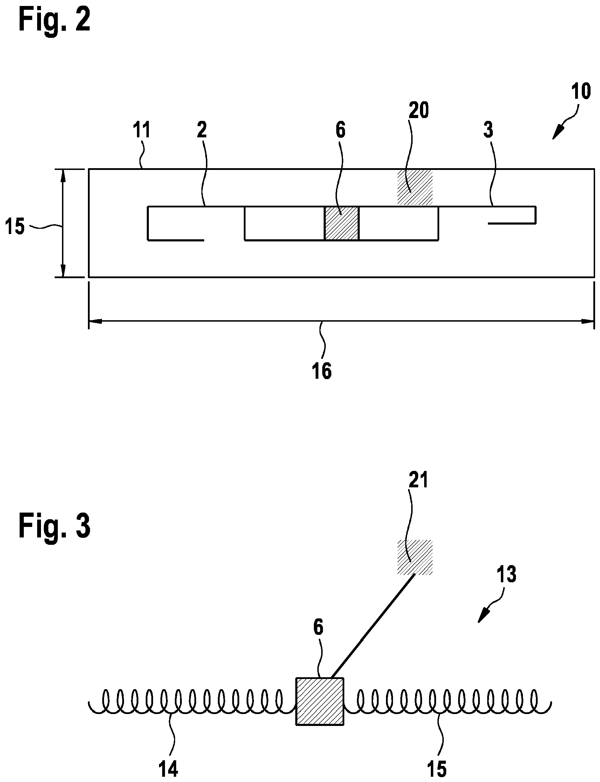

Die Figur 2 zeigt eine Aufsicht auf den folienförmigen RFID-Transponder. Der Transponder umfasst im Wesentlichen in der Mitte den Transponder-Chip 6 und die beiden angebundenen Antennen 2 und 3.

Im dargestellten Transponder ist ein Sensor 20 integriert. Bei diesem Sensor kann es sich beispielweise um einen Temperatursensor oder einen Kraftsensor handeln.

Alle Bauteile sind in eine Trägerfolie 11 eingebettet, die aus Kunststoff besteht und eine hohe Flexibilität besitzt. Die Materialdicke des folienförmigen RFID-Transponders beträgt weniger als 1 mm. Die Länge 16 des Transponders beträgt zwischen 30 und 80 mm. Die Breite 15 des Transponders beträgt zwischen 3 und 15 mm.

Die Figur 3 zeigt ein Ausführungsbeispiel für einen Transponder mit zwei spiralförmigen Antennen 13 und 14, die an den Transponder-Chip 6 angebunden sind.

Die Antennen 13 und 14 bestehen aus einem Metall und besitzen eine hohe Dauerfestigkeit.

Der Transponder 13 kann optional zwischen zwei Materialstreifen aus Gummi eingebettet sein, bevor er bei der Vorkonfektionierung zwischen dem Reifenkern und dem Kernreiter platziert wird.

Bei dieser Ausführung ist der Transponder 13 beispielsweise über eine Kabelverbindung mit einem externen Sensor 21 verbunden. Der externe Sensor 21 wird über den Transponder mit Energie versorgt und leitet seine Messdaten an den Transponder. Bei dem Sensor 21 kann es sich beispielsweise um einen Temperatursensor oder einen Profiltiefensensor handeln, der beispielsweise im Laufstreifen angeordnet ist.

### Bezugszeichenliste

(ist Teil der Beschreibung)
- 1: Transponder
- 2: linke Antenne
- 3: rechte Antenne
- 4: Reifenkern
- 5: Kernreiter bzw. Apex
- 6: Karkasslage
- 7: Seitenwand
- 8: Reifenwulst
- 9: Gummilage
- 10: Folienförmiger RFID-Transponder
- 11: Trägerfolie
- 12: Länge des Folienförmigen RFID-Transponders
- 13: Transponder mit zwei spiralförmigen Antennen
- 14: Linke spiralförmige Antenne
- 15: Rechte spiralförmige Antenne
- 16: Länge des Transponders
- 17: Äußere Lagenumschlag der Karkasslage
- 18: Höhe zwischen Transponder und Unterseite des Kernreiters
- 19: Höhe zwischen Transponder und Spitze des Kernreiters
- 20: Im Transponder integrierter Sensor (z.B. Temperatursensor)
- 21: Mit dem Transpoder verbundener Sensor (z.B. Profiltiefensensor)

## Patentansprüche

1. Fahrzeugreifen mit einem Laufstreifen, einem Reifengürtel, einer Reifenkarkasse mit mindestens einer Karkasslage, Seitenwänden (7) und einem Reifenwulst (8) mit einem Reifenkern (4) sowie einem Kernreiter (5), wobei die Karkasslage (6) im Reifenwulst (8) einen Lagenumschlag (17) ausbildet, der um den Kernreiter (5) und den Reifenkern (4) herumgeführt ist,
wobei der Transponder (1) einen Transponderchip (6) und eine an den Transponderchip (6) angebundende Antenne (2, 3) aufweist, wobei der Transponder (1) mindestens einen Sensor (20, 21) zur Erfassung von physikalischen Messdaten vom Fahrzeugreifen umfasst, wobei der Sensor (20) als Bauteil direkt am Transponder (1) integriert ist,
wobei die erfassten Messdaten über eine Funkverbindung zu einer Sende- und Empfangseinheit übertragen werden,
**dadurch gekennzeichnet, dass**
der Transponder (1) im Bereich des Reifenwulstes (8) angeordnet ist, wobei der Transponder (1) auf der zur Seitenwand gerichteten Außenseite des Kernreiters (5) angeordnet ist und der Transponder (1) zwischen dem Kernreiter (5) und dem äußeren Lagenumschlag (17) der Karkasslage (6) angeordnet ist,
wobei der Transponder (1) ein folienförmiger RFID-Transponder (10) mit zwei spiralförmigen Antennen (2, 3) ist, wobei der Transponder-Chip (6) und die Antennen (2, 3) in einer Trägerfolie (16) eingebettet sind, wobei die Trägerfolie (16) aus einem flexiblen Kunststoff besteht.

2. Fahrzeugreifen nach Anspruch 1,
**dadurch gekennzeichnet, dass**
der Sensor (20, 21) einen Temperatursensor umfasst.

3. Fahrzeugreifen nach einem der vorhergehenden Ansprüche,
**dadurch gekennzeichnet, dass**
der Sensor (21) einen Profiltiefensensor umfasst.

4. Fahrzeugreifen nach einem der vorhergehenden Ansprüche,
**dadurch gekennzeichnet, dass**
der Sensor (20, 21) einen Kraftsensor und/oder einen Drucksensor umfasst.

5. Fahrzeugreifen nach einem der vorhergehenden Ansprüche,
**dadurch gekennzeichnet, dass**
die erfassten Messdaten in einer Parkposition des Fahrzeuges zu einer Sende- und Empfangseinheit übertragen werden,
wobei die Sende- und Empfangseinheit fest in der Umgebung der Parkposition des Fahrzeuges installiert ist.

6. Fahrzeugreifen nach einem der vorhergehenden Ansprüche,
**dadurch gekennzeichnet, dass**
die erfassten Messdaten an eine zentrale Empfangseinheit von einem Fuhrparkmanagement weitergeleitet werden.

7. Fahrzeugreifen nach einem der vorhergehenden Ansprüche,
**dadurch gekennzeichnet, dass**
der Transponder (1) mit seinen beiden Antennenteilen (2, 3, 14, 15) in Umfangsrichtung zum Reifenkern (4) ausgerichtet ist.

8. Fahrzeugreifen nach einem der vorhergehenden Ansprüche,
**dadurch gekennzeichnet, dass**
die Trägerfolie (16) eine Materialdicke von kleiner als 1mm besitzt.

## Claims

1. Vehicle tyre comprising a tread, a breaker belt, a tyre carcass with at least one carcass ply, sidewalls (7) and a tyre bead (8) with a bead core (4) and a bead filler (5), the carcass ply (6) forming in the tyre bead (8) a ply turn-up (17), which is led around the bead filler (5) and the bead core (4),
wherein the transponder (1) has a transponder chip (6) and an antenna (2, 3) connected to the transponder chip (6), the transponder (1) comprising at least one sensor (20, 21) for capturing physical measurement data from the vehicle tyre, the sensor (20) being integrated as a component directly on the transponder (1), wherein the captured measurement data are transmitted to a transmitting and receiving unit via a radio connection,
**characterized in that**
the transponder (1) is arranged in the region of the tyre bead (8), the transponder (1) being arranged on the outer side of the bead filler (5) that is directed towards the sidewall and the transponder (1) being arranged between the bead filler (5) and the outer ply turn-up (17) of the carcass ply (6),
wherein the transponder (1) is a film-like RFID transponder (10) with two spiral antennas (2, 3), the transponder chip (6) and the antennas (2, 3) being embedded in a carrier film (16), the carrier film (16) consisting of a flexible plastic.

2. Vehicle tyre according to Claim 1,
**characterized in that**
the sensor (20, 21) comprises a temperature sensor.

3. Vehicle tyre according to one of the preceding claims,
**characterized in that**
the sensor (21) comprises a tread depth sensor.

4. Vehicle tyre according to one of the preceding claims,
**characterized in that**
the sensor (20, 21) comprises a force sensor and/or a pressure sensor.

5. Vehicle tyre according to one of the preceding claims,
**characterized in that**
the captured measurement data are transmitted to a transmitting and receiving unit in a parked position of the vehicle,
wherein the transmitting and receiving unit is fixedly installed in the vicinity of the parked position of the vehicle.

6. Vehicle tyre according to one of the preceding claims,
**characterized in that**
the captured measurement data are passed on to a central receiving unit of a fleet management system.

7. Vehicle tyre according to one of the preceding claims,
**characterized in that**
the transponder (1) is aligned with its two antenna parts (2, 3, 14, 15) in the circumferential direction in relation to the bead core (4).

8. Vehicle tyre according to one of the preceding claims,
**characterized in that**
the carrier film (16) has a material thickness of less than 1 mm.

## Revendications

1. Pneumatique de véhicule, comprenant une bande de roulement, une ceinture de pneumatique, une carcasse de pneumatique pourvue d'au moins une nappe de carcasse, des parois latérales (7) et un talon de pneumatique (8) pourvu d'une tringle de pneumatique (4) ainsi que d'un bourrage sur tringle (5), la nappe de carcasse (6) réalisant dans le talon de pneumatique (8) un retournement de pli (17) qui passe autour du bourrage sur tringle (5) et de la tringle de pneumatique (4),
le transpondeur (1) présentant une puce de transpondeur (6) et une antenne (2, 3) reliée à la puce de transpondeur (6), le transpondeur (1) comprenant au moins un capteur (20, 21) pour l'acquisition de données de mesure physiques du pneumatique de véhicule, le capteur (20) en tant que composant étant intégré directement sur le transpondeur (1),
les données de mesure acquises étant transmises par une liaison radio à une unité d'émission et de réception,
**caractérisé en ce que** le transpondeur (1) est disposé au niveau du talon de pneumatique (8), le transpondeur (1) étant disposé sur la face extérieure, dirigée vers la paroi latérale, du bourrage sur tringle (5), et le transpondeur (1) étant disposé entre le bourrage sur tringle (5) et le retournement de pli extérieur (17) de la nappe de carcasse (6),
le transpondeur (1) étant un transpondeur RFID (10) en forme de film, pourvu de deux antennes en spirale (2, 3), la puce de transpondeur (6) et les antennes (2, 3) étant incorporées dans un film support (16), le film support (16) étant composé d'une matière plastique flexible.

2. Pneumatique de véhicule selon la revendication 1, **caractérisé en ce que** le capteur (20, 21) comprend un capteur de température.

3. Pneumatique de véhicule selon l'une quelconque des revendications précédentes, **caractérisé en ce que** le capteur (21) comprend un capteur de profondeur de sculpture.

4. Pneumatique de véhicule selon l'une quelconque des revendications précédentes, **caractérisé en ce que** le capteur (20, 21) comprend un capteur de force et/ou un capteur de pression.

5. Pneumatique de véhicule selon l'une quelconque des revendications précédentes, **caractérisé en ce que** les données de mesure acquises sont dans une position de stationnement du véhicule transmises à une unité d'émission et de réception,
l'unité d'émission et de réception étant installée à demeure dans l'environnement de la position de stationnement du véhicule.

6. Pneumatique de véhicule selon l'une quelconque des revendications précédentes, **caractérisé en ce que** les données de mesure acquises sont retransmises à une unité de réception centrale par un système de gestion de flotte.

7. Pneumatique de véhicule selon l'une quelconque des revendications précédentes, **caractérisé en ce que** le transpondeur (1) avec ses deux parties d'antenne (2, 3, 14, 15) est orienté dans une direction circonférentielle par rapport à la tringle de pneumatique (4).

8. Pneumatique de véhicule selon l'une quelconque des revendications précédentes, **caractérisé en ce que** le film support (16) présente une épaisseur de matériau inférieure à 1 mm.
